# EUROPÄISCHE PATENTSCHRIFT

(11) **EP 2 762 788 B1**
(45) Veröffentlichungstag und Bekanntmachung des Hinweises auf die Patenterteilung: **08.03.2017**
(21) Anmeldenummer: 14151532.0
(22) Anmeldetag: 17.01.2014
(51) Int. Cl.: F24D 11/02, F24F 5/00

(54) **Energietransfersystem**
energy transfer system
Système de transfert d'énergie

(30) Priorität: 04.02.2013 DE 102013001827
(43) Veröffentlichungstag der Anmeldung: 06.08.2014
(73) Patentinhaber: Frenger Systemen BV Heiz- und Kühltechnik GmbH, 64823 Gross-Umstadt (DE)
(72) Erfinder: Menge, Klaus, 64823 Groß-Umstadt (DE)
(74) Vertreter: Keil & Schaafhausen Patent- und Rechtsanwälte PartGmbB

(56) Entgegenhaltungen:
- EP-A2- 2 375 175
- DE-A1- 4 434 831
- DE-A1-102007 063 141
- DE-A1-102009 054 126
- DE-U1- 20 102 546
- DE-U1- 29 806 464
- DE-U1-202007 011 546
- DE-U1-202009 016 299
- GB-A- 2 067 275
- GB-A- 2 457 926

## Beschreibung

Die Erfindung betrifft ein Energietransfersystem mit wenigstens einem ersten Wärmetauscher, einem mit diesem über Leitungen verbundenen Pufferspeicher, wenigstens einem mit diesem über Leitungen verbundenen zweiten Wärmetauscher und wenigstens einer Pumpe, die dazu eingerichtet ist, ein Wärmeträgermedium zur Erwärmung durch den wenigstens einen ersten Wärmetauscher zu leiten, nach der Erwärmung in den Pufferspeicher zu leiten, zur Abkühlung durch den wenigstens einen zweiten Wärmetauscher zu leiten und nach der Abkühlung in den Pufferspeicher zu leiten.

Derartige Energietransfersysteme sind beispielsweise zur Beheizung von Gebäuden mittels Geo- oder Solarthermie bekannt, wobei häufig im Boden eine Sonde oder auf dem Dach des Gebäudes ein Solarkollektor vorgesehen ist, in welchem als Wärmetauscher ein Wärmeträgermedium erwärmt wird, welches dann die Energie in einem Pufferspeicher einlagert. Aus diesem kann die eingelagerte Energie dann entweder zur Warmwasserbereitung oder an einen Heizkörper innerhalb des Gebäudes, d.h. einen weiteren Wärmetauscher, abgegeben werden.

Weiter ist es auch bekannt, zur Klimatisierung von Räumen eines Gebäudes in einem Raum einen ersten Wärmetauscher vorzusehen, der Energie in dem Raum aufnimmt, welche dann über einen zweiten Wärmetauscher, der auf oder außerhalb des Gebäudes vorgesehen ist, wieder an die Umgebung abgegeben wird.

In beiden Fällen erfolgt der Wärmetransfer bei einem der Wärmetauscher mit der Umgebung, nämlich bei der Aufheizung mittels der Erdsonde oder des Solarkollektors bzw. bei der Kühlung bei der Vernichtung von Energie. Ausgehend von diesem Stand der Technik stellt sich die Erfindung die Aufgabe, ein Energietransfersystem zu schaffen, bei welchem die Energie sinnvoller genutzt wird.

Die DE 298 06 464 U1 beschreibt einen Wasserspeicher, insbesondere für eine Zentralheizungsanlage mit einem Sonnenkollektor und einem Heizkessel, der über eine Leitung mit einem Pufferspeicher verbunden ist. Der Pufferspeicher ist über eine Pumpe mit einer Heizung verbunden. Der Heizkessel dient dazu, die oberste Speicherwasserschicht zu erwärmen, wenn nicht die für die Heizungsanlage erforderliche Mindesttemperatur erreicht wird.

Diese Aufgabe wird erfindungsgemäß mit einem Energietransfersystem nach Anspruch 1 gelöst.

Der Erfindung liegt dabei der Gedanke zugrunde, bei einem Energietransfersystem der oben genannten Art den wenigstens einen ersten Wärmetauscher als einen Kühlkonvektor auszubilden, der einem Raum oder einer Anlage mit einer Abwärmequelle zugeordnet ist, während der wenigstens eine zweite Wärmetauscher eine Heizung ist, die einem Raum oder einer Anlage mit einer Wärmesenke zugeordnet ist. Mit anderen Worten wird durch das erfindungsgemäße System ein Energietransfer innerhalb eines Gebäudes bzw. innerhalb einer Anlage durchgeführt, ohne dass die bei der Kühlung anfallende Wärme vernichtet und an die Umgebung abgegeben wird.

Der Einsatz wenigstens eines Kühlkonvektors bringt den Vorteil mit sich, dass durch die Konvektion eine gute Kühlwirkung entsteht, ohne dass hierzu eine energieintensive Luftumwälzung erforderlich ist. Unter einem Kühlkonvektor wird insbesondere ein Wärmetauscher verstanden, bei dem der Wärmeaustausch im Wesentlichen durch Konvektion erfolgt. Die bei diesem Wärmetausch entstehende Luftbewegung wird durch die Dichteänderung der Luft bewirkt, so dass auf einen Ventilator oder dgl. zur aktiven Bewegung der Lift verzichtet werden kann. In Abgrenzung zu einer Stahlplatte, bei der der Anteil der Strahlungswärme bei z.B. etwa 60% liegt, hat ein Kühlkonvektor nur einen sehr geringen Strahlungswärmeanteil von üblicherweise unter 5%. Der Verzicht auf einen Ventilator oder dgl. trägt zum energieeffizienten Transfer von Abwärme zu einem Verbraucher bei.

Der Einsatz des Pufferspeichers ermöglicht es, dass die bei der Kühlung anfallende Abwärme nicht kontinuierlich anfallen muss, sondern z.B. intermittierend abhängig vom Betrieb einer als Wärmequelle dienenden Anlage. In gleicher Weise muss auch die Entnahme von Wärme aus dem Pufferspeicher durch den wenigstens einen zweiten Wärmetauscher nicht kontinuierlich erfolgen, sondern die Heizung kann bedarfsgerecht eingesetzt werden.

Nach einer bevorzugten Ausführungsform der Erfindung ist wenigstens eine Wärmepumpe zwischen dem Pufferspeicher und einem der Wärmetauscher vorgesehen. Auf diese Weise ist es möglich, energieeffizient die bei der Kühlung gewonnene Energie auf ein höheres Temperaturniveau anzuheben, soweit dies erforderlich ist. Auch die Wärmepumpe muss nicht kontinuierlich betrieben werden, sondern kann bedarfsgerecht zugeschaltet werden.

In Weiterbildung dieses Erfindungsgedankens ist es vorgesehen, dass die Wärmetauscher über die Leitungen direkt mit dem Pufferspeicher verbunden sind und der Pufferspeicher zusätzlich über die wenigstens eine Wärmepumpe und Bypassleitungen mit wenigstens einem der Wärmetauscher verbunden ist. Auf diese Weise ist es möglich, dass die Wärmepumpe nur dann eingesetzt wird, wenn das Temperaturniveau für die Kühlung oder für die Erwärmung nicht ausreichend ist.

Es wird bevorzugt, wenn der Pufferspeicher ein Schichtenspeicher ist. Dies bewirkt, dass sich zumindest Bereiche des Pufferspeichers schneller aufheizen, wenn vorher eine große Menge Energie aus dem Speicher entnommen wurde oder zumindest Bereiche des Speichers schneller abgekühlt werden, wenn zuvor eine große Energiemenge in den Speicher eingelagert wurde.

Der wenigstens eine zweite Wärmetauscher ist üblicherweise eine Heizung, die einen Raum eines Gebäudes oder Teile einer Anlage als Wärmesenke erwärmen kann. Es ist auch möglich, unterschiedliche Heizungen mit dem Pufferspeicher zu verbinden. So kann der wenigstens eine zweite Wärmetauscher beispielsweise eine Raumheizung, wie eine Fußbodenheizung, Wandheizung, Deckenstrahlheizung, oder dgl. sein, eine Türschleierheizung oder eine Heizung innerhalb einer Anlage sein. Als Beispiel hierfür kann der wenigstens eine zweite Wärmetauscher zur Leimvorwärmung in der Wellpappenherstellung eingesetzt werden. Hierzu sind bereits recht niedrige Temperaturen von beispielsweise ab etwa 30°C ausreichend. Auch andere Nutzungen als Prozesswärme sind erfindungsgemäß möglich.

Weiter betrifft die Erfindung die Verwendung des oben beschriebenen Energietransfersystems zur Kühlung einer Anlage und zur Erwärmung einer anderen Anlage sowie ein Gebäude, in welchem ein derartiges Energietransfersystem vorhanden ist, wobei in einem Raum der wenigstens eine erste Wärmetauscher vorgesehen ist und in einem anderen Raum des Gebäudes der wenigstens eine zweite Wärmetauscher vorgesehen ist.

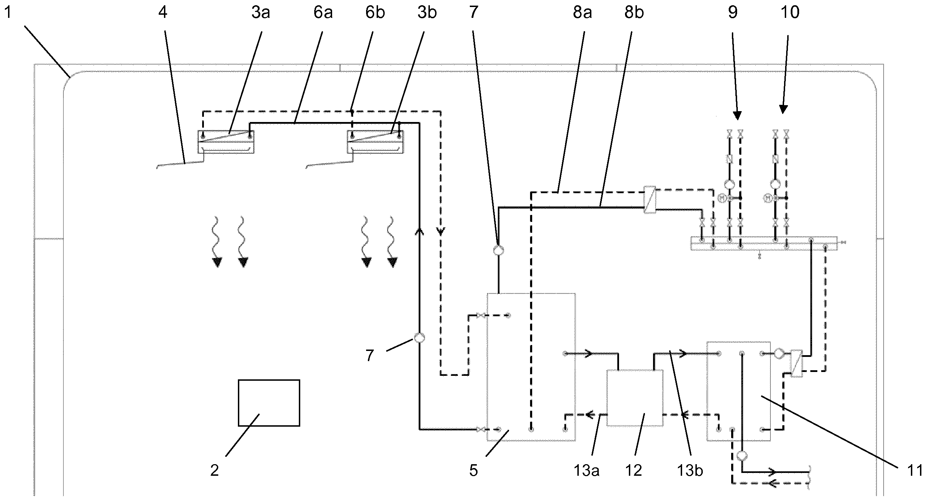

Die Erfindung wird nachfolgend anhand eines Ausführungsbeispiels und unter Bezugnahme auf die Zeichnungen näher erläutert. Die einzige Figur zeigt schematisch den Schaltplan eines erfindungsgemäßen Energietransfersystems.

In der Figur ist schematisch ein Gebäude 1 angedeutet, in welchem in einem Raum eine Wärmequelle 2 vorhanden ist. Dies kann beispielsweise eine in einer Halle vorgesehene Maschine sein, deren Abwärme nicht direkt an der Maschine abgenommen werden kann, sondern die in die Raumluft abgegeben wird. In Einbaulage oberhalb der Wärmequelle 2 sind in der dargestellten Ausführungsform zwei als Kühlkonvektoren ausgebildete erste Wärmetauscher 3a, 3b vorgesehen. Die Kühlkonvektoren 3a, 3b können unter dem Taupunkt betrieben werden, so dass in der Figur für jeden der Kühlkonvektoren 3a, 3b jeweils ein Kondensatablauf 4 angedeutet ist.

In demselben oder einem anderen Raum des Gebäudes 1 ist ein Pufferspeicher 5 vorgesehen, der wie in der Figur angedeutet als ein Schichtenspeicher ausgebildet sein kann. Der Pufferspeicher 5 ist mit den beiden Kühlkonvektoren 3a, 3b über Leitungen 6a, 6b so verbunden, dass ein Wärmeträgermedium über die Leitung 6a aus dem Pufferspeicher 5 zu den Kühlkonvektoren 3a, 3b geleitet wird und nach der Erwärmung darin über die Leitung 6b wieder zurück in den Pufferspeicher geführt wird. Hierzu ist eine Pumpe 7 vorgesehen.

Die in dem Pufferspeicher 5 eingelagerte Energie kann über Leitungen 8a, 8b und weitere Wärmetauscher an Verbraucher abgegeben werden. In der dargestellten Ausführungsform sind Anschlüsse für eine Deckenstrahlheizung 9, einen Türschleier 10 sowie eine Leimwärmanlage 11 vorgesehen, die jeweils in unterschiedlichen Räumen des Gebäudes oder ggf. auch in demselben Gebäude wie der Pufferspeicher 5 vorgesehen sein können. Hierbei wird warmes Wärmeträgermedium über die Leitung 8b den Wärmetauschern zugeleitet und abgekühltes Wärmeträgermedium über die Leitung 8a in den Pufferspeicher 5 zurückgeführt. Auch in diesem Kreislauf ist eine Pumpe 7 vorgesehen, die das Wärmeträgermedium fördert.

In dem dargestellten Ausführungsbeispiel ist zusätzlich eine Wärmepumpe 12 dargestellt, die über Bypassleitungen 13a, 13b mit dem Pufferspeicher 5 und der Leimwärmanlage 11 verbunden ist. Wenn das Temperaturniveau in dem Pufferspeicher 5 zu niedrig für den Bedarf der Leimwärmanlage 11 ist, kann erwärmtes Wärmeträgermedium über die Bypassleitung 13b und die Wärmepumpe 12 zu der Leimwärmanlage 11 geleitet werden und abgekühltes Wärmeträgermedium über die Bypassleitung 13a und die Wärmepumpe 12 zurück in den Pufferspeicher 5 geleitet werden. Die Wärmepumpe 12 kann dabei mit geringem Energieeinsatz die Temperatur des Wärmeträgermediums auf das benötigte Niveau anheben. Alternativ hierzu ist es auch möglich, zwischen einem oder mehreren der Kühlkonvektoren 3a, 3b und dem Pufferspeicher 5 eine Wärmepumpe vorzusehen, sofern das Temperaturniveau in dem Pufferspeicher 5 für die Kühlung der Wärmequelle 2 zu hoch ist.

In einem erfindungsgemäßen Beispiel ist die Wärmequelle eine Maschine, deren Abwärme die Luft im Bereich der Kühlkonvektoren 3a, 3b auf beispielsweise etwa 40 bis 50°C erwärmt. Die Kühlkonvektoren, die jeweils eine Leistung von beispielsweise 50 kW haben können, senken das Temperaturniveau um beispielsweise 10°C, so dass über die Leitung 6b Wärmeträgermedium mit einer Temperatur von etwa 35 bis 40°C in den Pufferspeicher 5 eingeleitet wird. Dieses kann über die Leitung 8b an die Wärmetauscher 9, 10 und/oder 11 abgegeben werden.

Am Boden des Pufferspeichers 5 herrscht beispielsweise ein Temperaturniveau von etwa 25 bis 30°C, so dass über die Leitung 6a entsprechend gekühltes Wärmeträgermedium wieder zu den Kühlkonvektoren 3a, 3b geleitet werden kann. Über die Wärmepumpe 12, die beispielsweise eine Leistung von 30 kW hat, kann die Temperatur des aus dem Pufferspeicher 5 entnommenen Wärmeträgermediums auf beispielsweise etwa 50 bis 55°C angehoben und der Leimwärmanlage 11 über die Bypassleitung 13b zugeführt werden.

### Bezugszeichenliste:

- 1: Gebäude
- 2: Wärmequelle
- 3a, 3b: erster Wärmetauscher (Kühlkonvektor)
- 4: Kondensatablauf
- 5: Pufferspeicher
- 6a, 6b: Leitung
- 7: Pumpe
- 8a, 8b: Leitung
- 9: zweiter Wärmetauscher (Deckenstrahlheizung)
- 10: zweiter Wärmetauscher (Türschleier)
- 11: zweiter Wärmetauscher (Leimwärmanlage)
- 12: Wärmepumpe
- 13a, 13b: Bypassleitung

## Patentansprüche

1. Energietransfersystem mit wenigstens einem ersten Wärmetauscher (3a, 3b), wenigstens einem mit diesem über Leitungen (6a, 6b) verbundenen Pufferspeicher (5), wenigstens einem mit diesem über Leitungen (8a, 8b) verbundenen zweiten Wärmetauscher (9, 10, 11) und wenigstens einer Pumpe (7), die dazu eingerichtet ist, ein Wärmeträgermedium zur Erwärmung durch den wenigstens einen ersten Wärmetauscher (3a, 3b) zu leiten, nach der Erwärmung in den Pufferspeicher (5) zu leiten, zur Abkühlung durch den wenigstens einen zweiten Wärmetauscher (9, 10, 11) zu leiten und nach der Abkühlung in den Pufferspeicher (5) zu leiten, wobei der wenigstens eine zweite Wärmetauscher (9, 10, 11) eine Heizung ist, die einem Raum oder einer Anlage mit einer Wärmesenke zugeordnet werden kann, **dadurch gekennzeichnet, dass** der wenigstens eine erste Wärmetauscher ein Kühlkonvektor (3a, 3b) ist, der einem Raum mit einer Abwärmequelle (2) zugeordnet werden kann, und durch den eine durch eine Dichteänderung der Luft bewirkte Luftbewegung enstehen kann.

2. Energietransfersystem nach Anspruch 1, **gekennzeichnet durch** wenigstens eine Wärmepumpe (12), die zwischen dem Pufferspeicher (5) und dem wenigstens einen zweiten Wärmetauscher (9, 10, 11) und/oder zwischen dem Pufferspeicher (5) und dem wenigstens einen ersten Wärmetauscher (3a, 3b) geschaltet ist.

3. Energietransfersystem nach Anspruch 2, **dadurch gekennzeichne**t, dass die Wärmetauscher (3a, 3b, 9, 10, 11) über die Leitungen (6a, 6b, 8a, 8b) direkt mit dem wenigstens einen Pufferspeicher (5) verbunden sind und der wenigstens eine Pufferspeicher (5) über die wenigstens eine Wärmepumpe (12) und Bypassleitungen (13a, 13b) mit wenigstens einem der Wärmetauscher (9, 10, 11) verbunden ist.

4. Energietransfersystem nach einem der vorhergehenden Ansprüche,
**dadurch gekennzeichnet, dass** der Pufferspeicher (5) ein Schichtenspeicher ist.

5. Energietransfersystem nach einem der vorhergehenden Ansprüche,
**dadurch gekennzeichnet, dass** der wenigstens eine zweite Wärmetauscher eine Raumheizung (9) ist.

6. Energietransfersystem nach einem der vorhergehenden Ansprüche, **dadurch gekennzeichnet, dass** der wenigstens eine zweite Wärmetauscher eine Türschleierheizung (10) ist.

7. Energietransfersystem nach einem der vorhergehenden Ansprüche,
**dadurch gekennzeichnet, dass** der wenigstens eine zweite Wärmetauscher ein Prozesswärmenutzer (11) ist.

## Claims

1. An energy transfer system with at least one first heat exchanger (3a, 3b), at least one buffer tank (5) that is connected to the first heat exchanger via conduits (6a, 6b), at least one second heat exchanger (9, 10, 11) that is connected to the buffer tank via conduits (8a, 8b), and at least one pump (7) that is designed for conveying a heat transfer medium through the at least one first heat exchanger (3a, 3b) in order to heat the heat transfer medium, for conveying the heat transfer medium into the buffer tank (5) after it has been heated, for conveying the heat transfer medium through the at least one second heat exchanger (9, 10, 11) in order to cool the heat transfer medium, and for conveying the heat transfer medium into the buffer tank (5) after it has been cooled, wherein the at least one second heat exchanger (9, 10, 11) is a heater that can be assigned to a room or a system with a heat sink,
**characterized in that** the at least one first heat exchanger is a cooling convector (3a, 3b) that can be assigned to a room with a waste heat source (2) and by means of which an air movement caused by an air density change can be realized.

2. The energy transfer system according to claim 1,
**characterized by** at least one heat pump (12) that is connected between the buffer tank (5) and the at least one second heat exchanger (9, 10, 11) and/or between the buffer tank (5) and the at least one first heat exchanger (3a, 3b).

3. The energy transfer system according to claim 2,
**characterized in that** the heat exchangers (3a, 3b, 9, 10, 11) are directly connected to the at least one buffer tank (5) via the conduits (6a, 6b, 8a, 8b) and the least one buffer tank (5) is connected to at least one of the heat exchangers (9, 10, 11) via the at least one heat pump (12) and bypass conduits (13a, 13b).

4. The energy transfer system according to one of the preceding claims, **characterized in that** the buffer tank (5) is a multi-layered tank.

5. The energy transfer system according to one of the preceding claims, **characterized in that** the at least one second heat exchanger is a room heater (9).

6. The energy transfer system according to one of the preceding claims, **characterized in that** the at least one second heat exchanger is a door curtain heater (10).

7. The energy transfer system according to one of the preceding claims, **characterized in that** the at least one second heat exchanger is a process heat user (11).

## Revendications

1. Système de transfert d'énergie comportant au moins un premier échangeur de chaleur (3a, 3b), au moins un accumulateur tampon (5) raccordé à celui-ci par des canalisations (6a, 6b), au moins un second échangeur de chaleur (9, 10, 11) raccordé à celui-ci par des canalisations (8a, 8b) et au moins une pompe (7) qui est conçue pour conduire un fluide caloporteur pour réchauffement dans l'au moins un premier échangeur de chaleur (3a, 3b), pour le conduire après réchauffement dans l'accumulateur tampon (5), pour le conduire pour refroidissement dans l'au moins un second échangeur de chaleur (9, 10, 11) et pour le conduire après refroidissement dans l'accumulateur tampon (5), l'au moins un second échangeur de chaleur (9, 10, 11) étant un chauffage qui peut être associé à un espace une installation comportant un puits thermique,
**caractérisé en ce que** l'au moins un premier échangeur de chaleur est un convecteur de refroidissement (3a, 3b) qui peut être associé à un espace comportant une source de diffusion thermique (2) et à travers lequel un mouvement d'air dû à une modification de densité de l'air peut se produire.

2. Système de transfert d'énergie selon la revendication 1, **caractérisé par** au moins une pompe à chaleur (12) qui est e entre l'accumulateur tampon (5) et l'au moins un second échangeur de chaleur (9, 10, 11) et/ou entre l'accumulateur tampon (5) et l'au moins un premier échangeur de chaleur (3a, 3b).

3. Système de transfert d'énergie selon la revendication 2, **caractérisé en ce que** les échangeurs de chaleur (3a, 3b, 9, 10, 11) sont raccordés par les canalisations (6a, 6b, 8a, 8b) directement à l'au moins un accumulateur tampon (5) et que l'au moins un accumulateur tampon (5) est relié par l'au moins une pompe à chaleur (12) et des conduites de dérivation (13a, 13b) à au moins des échangeurs de chaleur (9, 10, 11).

4. Système de transfert d'énergie selon une des revendications précédentes, **caractérisé en ce que** l'accumulateur tampon (5) est un accumulateur à couches.

5. Système de transfert d'énergie selon une des revendications précédentes, **caractérisé en ce que** l'au moins un second accumulateur de chaleur est un chauffage ambiant (9).

6. Système de transfert d'énergie selon une des revendications précédentes, **caractérisé en ce que** l'au moins un second accumulateur de chaleur est un chauffage à rideau d'air (10).

7. Système de transfert d'énergie selon une des revendications précédentes, **caractérisé en ce que** l'au moins un second accumulateur de chaleur est un consommateur de chaleur de traitement (11).
